# EUROPÄISCHE PATENTANMELDUNG

(11) **EP 4 383 649 A1**
(43) Veröffentlichungstag der Anmeldung: **12.06.2024**
(21) Anmeldenummer: 23213699.4
(22) Anmeldetag: 01.12.2023
(51) Int. Cl.: H04L 9/40, H04L 67/12, H04L 67/56, H04Q 9/00, H04W 4/38, H04W 4/70, H04W 84/18

(54) **VERFAHREN ZUM BETRIEB EINES FUNKKNOTENS SOWIE FUNKKNOTEN**

(30) Priorität: 06.12.2022 DE 102022132419
(71) Anmelder: Diehl Metering Systems GmbH, 90451 Nürnberg (DE)
(72) Erfinder: Joppich-Dohlus, Petra, 91080 Rathsberg (DE); Schmidt, Achim, 91367 Weißenohe (DE); Blank, Thomas, 91732 Merkendorf (DE)
(74) Vertreter: Diehl Patentabteilung

(57) **Zusammenfassung**

Die vorliegende Erfindung betrifft ein Verfahren zum Betrieb eines Funkknotens (100), vorzugsweise eines Funksensorknotens zur Erfassung eines Verbrauchs und/oder eines Funkaktorknotens zur Verrichtung einer Arbeit, in einem eine Mehrzahl von Funkknoten (100) umfassenden Fixed Netzwerk (500),
wobei zwischen einem Funkknoten (100) und einer Basisstation (200) des Fixed Netzwerks (500) eine erste, vorzugsweise bidirektionale Primär-Kommunikationsstrecke (PKS1) vorgesehen ist, über die ein Zugriff, insbesondere ein Konfigurationszugriff, von der Basisstation (200) oder über die Basisstation (200) auf den Funkknoten (100) durchführbar ist,
wobei zwischen dem Funkknoten (100) und einer mobilen Datensende-/Empfangsstation (300) eine zweite vorzugsweise bidirektionale Primär-Kommunikationsstrecke (PKS2) vorgesehen ist, über die ein Zugriff, insbesondere ein Konfigurationszugriff, von der mobilen Datensende-/Empfangsstation (300) oder über die mobile Datensende-/Empfangsstation (300) auf den Funkknoten (100) durchführbar ist,
wobei ein Head End (400) vorgesehen ist, in dem die Funkknoten (100) verwaltet werden, und
wobei das Head End (400) in der Lage ist, mit der Basisstation (200) des Fixed Netzwerks (500) und/oder mit der mobilen Datensende-/ Empfangsstation (300) über eine tertiäre Kommunikationsstrecke (TKS1, TKS2) zu kommunizierten. Um einen sicheren Betrieb zu ermöglichen, ist erfindungsgemäß vorgesehen, dass
ein Zugriff, insbesondere ein Konfigurationszugriff, von der mobilen Datensende-/Empfangsstation (300) oder vom Head End (400) über die mobile Datensende-/Empfangsstation (300) auf einen Funkknoten (100) der Mehrzahl der Funkknoten (100) des Fixed Netzwerk (500) mittels Zugriffdaten auf Basis einer Kombination eines Tokens (101) sowie eines Digital Twin (102) der Betriebsdaten des betreffenden Funkknotens (100) erfolgt.

## Beschreibung

Die vorliegende Erfindung betrifft zum einen ein Verfahren zum Betrieb eines Funkknotens, vorzugsweise eines Funksensorknotens zur Erfassung eines Verbrauchs und/oder eines Funkaktorknotens zur Verrichtung einer Arbeit, in einem eine Mehrzahl von Funkknoten umfassenden Fixed Netzwerk, gemäß dem Oberbegriff des Anspruchs 1. Zum anderen betrifft die Erfindung einen Funkknoten, insbesondere Funksensorknoten zur Erfassung eines Verbrauchs und/oder einen Funkaktorknoten zur Verrichtung einer Arbeit, gemäß dem Oberbegriff des Anspruchs 17.

Der Funkknoten repräsentiert einen Funkknoten aus einer Mehrzahl von Funkknoten eines Fixed Netzwerks. Der Funkknoten verfügt über eine eigene Batterie, insbesondere Longlife-Batterie, die ihn energieautark mit Energie im Fixed Netzwerk versorgt. Um die Batterie zu schonen, sind die Funkknoten üblicherweise in einem Sleep-Modus und übertragen in einem Wakeup-Modus zu bestimmten Zeiten Daten an eine ortsfeste Basisstation. Hierzu werden zeitliche Zugriffsfenster für die Basisstation zum Auslesen von Daten des Funkknotens sowie zum Senden von Kommandos an den Funkknoten (z. B. Kommandos zur Konfiguration) festgelegt. Der Ablauf der Zugriffe erfolgt hierbei vorzugsweise automatisiert. Die Übertragung im Funksystem ist vorzugsweise bidirektional. Die Funkknoten des Fixed Netzwerks können ausschließlich mit den ortsfesten Basisstationen oder bei Bedarf auch untereinander kommunizieren. Die Funkknoten des Fixed Netzwerks sollen gemäß dem Ausgangspunkt der vorliegenden Erfindung nicht nur durch ortsfeste Basisstationen, sondern auch durch mobile Datensende-/Empfangsstationen oder "Datensende-/Empfangsstation" beinflussbar sein. Bei einer mobilen Datensende-/Empfangsstation handelt es sich um eine Kommunikationseinheit, die sich auf einem Fahrzeug befindet oder von einer Person getragen wird und auf diese Weise eine mobile Auslesung bzw. Konfiguration ermöglicht. Potentiell können Zugriffe auf einzelne Funkknoten z.B. für eine Konfiguration oder Konfigurationsanpassung desselben über Basisstationen sowie über mobile Datensende-/Empfangsstationen gleichzeitig ausgeführt werden, da es sein kann, dass ein Benutzer des Fixed Netzwerks sowie ein Netzwerk-automatisierter Mechanismus einen bestimmten Funkknoten gleichzeitig beeinflussen wollen. Die Kommunikationsbandbreiten und Zugriffsfenster können jedoch teilweise stark eingeschränkt sein, was ein Aushandeln einer Kommunikation und die Verwendung von Konfigurationsdaten erschwert. Ein unkoordinierter Zugriff kann zu Kommunikationsfehlern, Fehlkonfigurationen sowie zu einem Verlust der Datenintegrität im Knoten führen.

### Druckschriftlicher Stand der Technik

Die DE 101 33 367 A1 beschreibt einen Verbrauchszähler, der für die Funktelegrammaussendung an einen ortsfesten Empfänger sowie an einen mobilen Empfänger unterschiedliche Funktelegrammtypen verwendet. Hierbei handelt es sich um ein Verfahren zur unidirektionalen Übertragung von Daten eines Verbrauchszählers an einen Empfänger.

Die US 2016/0080837 A1 beschreibt ein Verfahren zur bidirektionalen Kommunikation einzelner Endpunkte z.B. Verbrauchszähler eines AMR-Netzwerks mit einem Datensammler, der entweder ortsfest oder mobil sein kann. Das Verfahren bezieht sich auf Maßnahmen zur Lokalisierung eines "Endpunkts von Interesse".

EP 3 930 291 A1 betrifft ein Datenverarbeitungsgerät mit einem LoRa-Kommunikationsmodul zum Empfangen von Messdaten. Zum Entfernen oder Hinzufügen von Sensoreinheiten im bzw. in das Netzwerk werden Access Token verwendet.

Die US 9 494 480 B2 betrifft eine Wasserparameter Verwendung- und Überwachungseinrichtung, mittels welcher die Wasserqualität eines Wasserversorgungsnetzes überwacht werden kann. Hierbei kann für die Einrichtung eines Zugangs in die Einrichtung unter anderem auch eine Token-Autorisierung vorgesehen sein.

### Aufgabe der vorliegenden Erfindung

Die Aufgabe der vorliegenden Erfindung besteht darin, eine sicherere Konfigurierbarkeit von Funkknoten in einem auch mobil auslesbaren und auch mobil konfigurierbaren Fixed Netzwerk zu ermöglichen.

### Lösung der Aufgabe

Die vorliegende Aufgabe wird bei dem gattungsgemäßen Verfahren nach Anspruch 1 durch die Merkmale des kennzeichnenden Teils von Anspruch 1 sowie bei dem gattungsgemäßen Funkknoten gemäß Anspruch 17 durch die Merkmale des kennzeichnenden Teils von Anspruch 17 gelöst. Zweckmäßige Ausgestaltungen der Erfindung werden in den Unteransprüchen beansprucht.

Erfindungsgemäß erfolgt ein Zugriff, insbesondere ein Konfigurationszugriff, von der mobilen Datensende-/Empfangsstation oder vom Head End über die mobilen Datensende-/Empfangsstation auf einen Funkknoten der Mehrzahl der Funkknoten des Fixed Netzwerk mittels Zugriffdaten auf Basis der Kombination eines, vorzugsweise Funkknoten-individuellen, Tokens bzw. Zugriffspfands sowie eines Digital Twin der Betriebsdaten, vorzugsweise der Konfigurationsdaten des betreffenden Funkknotens. Die Erfindung ermöglicht es, dass ein Benutzer z.B. bei Problemen im Fixed Netzwerk dennoch eine Konfiguration an einem Knoten durchführen kann, indem er diese anstatt im Fixed Netzwerk bei einer mobilen Tour mithilfe einer mobilen Datensende-/Empfangsstation vornimmt. Es ist somit in einem gewissen Zeitfenster erfindungsgemäß ausschließlich ein einziger beeinflussender Zugriff auf einen Funkknoten möglich. Aufgrund der Kombination des Funkknoten-individuellen Tokens und des Digital Twins können durch nicht synchronisierte Zugriffe bedingte Kommunikationsfehler, Fehlkonfigurationen oder ein Verlust der Datenintegrität wirksam vermieden werden. Bei dem Digital Twin handelt es sich um ein Abbild der Funkknoten-Konfiguration, d.h. der Funkknoten-Attribute, zu einem bestimmten Zeitpunkt.

Vorzugsweise werden für die jeweiligen Knoten des Fixed Netzwerk jeweils ein Token sowie ein Digital Twin im Head End geführt oder gebildet. Knoten, Token sowie Digital Twin können hierdurch eindeutig einander zugeordnet werden.

Für einen Zugriff durch die mobile Datensende-/Empfangsstation kann der Token als elektronisches Zugriffspfand vom Head End an die auserwählte mobile Datensende-/Empfangsstation im Rahmen der Zugriffsdaten übertragen werden, womit diese in die Lage versetzt wird, den Zugriff auf den Knoten durchzuführen. Vorzugsweise wird hierbei der Knoten im Head End für das Ausführen weiterer Aktionen gesperrt. Hierdurch kann der Zugriff auf den betreffenden Knoten bedarfsgerecht synchronisiert werden.

Der Token kann hierbei beispielsweise einen elektronischen Zugriffschlüssel des jeweiligen Funkknotens umfassen oder durch Letzteren realisiert werden.

Als Betriebsdaten kann der Digital Twin des jeweiligen Funkknotens insbesondere die ID-Daten, und/oder die Funkparameter, insbesondere das Sendeschema, und/oder die Konfiguration des Frameinhalts, und/oder das Alarmprofil, und/oder die Konfiguration der Log Files umfassen. Somit ist der Digital Twin auf diese Daten begrenzt. Dies wiederum bewirkt, dass der Konfigurationsablauf vereinfacht durchgeführt werden kann.

Nach oder mit der Konfiguration des Knotens wird der Digital Twin entsprechend angepasst, d.h. synchronisiert. Dementsprechend werden die betreffenden Änderungen der Betriebsdaten bzw. Konfigurationsdaten in den Digital Twin übertragen. Dies kann entweder durch die mobile Datensende-/Empfangsstation oder durch das Head End erfolgen. Da die zugreifende Instanz, z.B. die mobile Datensende-/Empfangsstation, einen Digital Twin also eine Kopie der Konfigurationsdaten bzw. Attributsdaten des Knotens besitzt, ist es nicht notwendig, dass der Knoten vor dem Verändern der Konfiguration komplett ausgelesen werden muss. Hierdurch kann ein Ändern von Betriebsdaten, vorzugsweise Konfigurationsdaten, bei der Vielzahl der in einem Fixed Netzwerk vorhandenen Funkknoten erheblich vereinfacht werden.

Für den Zugriff kann mit dem Token vom Head End an die zugreifende mobilen Datensende-/Empfangsstation auch der Digital Twin übertragen werden.

Nach dem Zugriff bzw. der Konfiguration des Knotens können die Zugriffdaten in Form des Tokens oder des Digital Twin und des Token von der zugreifenden mobilen Datensende-/Empfangsstation an das Head End wieder rückübertragen werden. Nach dem Empfang der Zugriffsdaten durch das Head End kann somit der Zugriff auf den Funkknoten wieder freigegeben werden. Nach Rückgabe werden die Zugriffsdaten wieder freigegeben.

Sollte eine Rückübertragung nicht durchführbar sein, können die Zugriffsdaten in Form des Tokens oder des Digital Twin und des Token auf dem betreffenden Knoten auch zwangsweise wieder freigeben werden. In diesem Fall muss der Digital Twin neu erstellt bzw. neu synchronisiert und vom Funkknoten ausgelesen werden.

Gemäß einer zweckmäßigen Ausgestaltung kann der Token eine zeitlich begrenzte Gültigkeit haben, also ein Wirksamkeits-Ablaufdatum besitzen.

Der Zugriff auf den Knoten kann vom Head End der mobilen Datensende-/Empfangsstation, insbesondere im Zuge eines Arbeitsauftrags, zugewiesen werden oder von der mobilen Datensende-/Empfangsstation beim Head End angefordert werden.

Sobald Zugriffsdaten der betreffende Funkknoten erstellt worden sind, sind die betreffenden Funkknoten gegen anderweitige Zugriffe in der zentralen Einheit gesperrt.

Zur Steuerung des Zugriffs können die Zugriffsdaten vorgefertigte Kommandos umfassen oder durch letztere gebildet sein. Im Fall von vorgefertigten Kommandos kann der Digital Twin im Head End verbleiben. Die Konfiguration des Knotens findet hierbei auf Basis der vorgefertigten Kommandos statt. Gleiches gilt in Bezug auf die im Rahmen der Konfiguration stattfindenden Aktualisierung bzw. Synchronisation des im Head End verbliebenen Digitalen Twin.

Gemäß einer besonderen Ausgestaltung kann der Token auch als Markierung im Digital Twin implementiert sein.

Gemäß einer zweckmäßigen Ausgestaltung der Erfindung kann der Token und/oder der Digital Twin der Betriebsdaten des betreffenden Funkknotens auch bei einem Zugriff, z. B. einer Konfiguration des betreffenden Funkknotens, über das Fixed Netzwerk bzw. über dessen Basisstation verwendet werden. Solange der Token und/oder der Digital Twin des betreffenden Funkknotens vom Fixed Netzwerk bzw. dessen Basisstation verwendet wird, ist ein Konfigurationsauftrag für das mobile System nicht möglich.

Im Rahmen der Erfindung ist als Fixed Netzwerk vorzugsweise LoRaWAN implementiert.

Zwischen dem Funkknoten und der mobilen Datensende-/Empfangsstation ist vorzugsweise eine drahtlose M-Bus-Kommunikation implementiert.

Im Fixed Netzwerk findet vorzugsweise im Regelbetrieb ein, vorzugsweise automatisierter, zeitfensterbasierter bidirektionaler Datenaustausch statt.

Die vorliegende Erfindung betrifft des Weiteren einen Funkknoten, insbesondere einen Funksensorknoten zur Erfassung eines Verbrauchs und/oder einen Funkaktorknoten zur Verrichtung einer Arbeit, gemäß dem Oberbegriff des Anspruchs 17. Zur Lösung der eingangs genannten Aufgabe ist der Funkknoten dadurch gekennzeichnet, dass die elektronische Steuer- und Regeleinrichtung zum Betrieb des Verfahrens nach mindestens einem der Ansprüche 1 bis 16 hergerichtet ist.

### Beschreibung der Erfindung anhand von Ausführungsbeispielen

Nachstehend werden Ausführungsbeispiele der vorliegenden Erfindung anhand von Zeichnungsfiguren näher erläutert. Wiederkehrende Merkmale sind der Übersichtlichkeit halber lediglich einmal mit einem Bezugszeichen versehen. Es zeigen:
- Fig. 1: eine grob vereinfachte schematische Darstellung eines Beispiels eines Fixed Netzwerks sowie einer mobilen Datensende-/Empfangsstation, mittels der auf die einzelnen Funkknoten des Fixed Netzwerks zugegriffen werden kann;
- Fig. 2: eine stark vereinfachte schematische Darstellung der Funktionseinheiten eines Funkknotens des Fixed Netzwerks von Fig. 1;
- Fig. 3: eine stark vereinfachte schematische Darstellung der Struktur der Erstellung eines Konfigurationsauftrags vom Head End an die mobile Datensende-/Empfangsstation für einen Funkknoten des Fixed Netzwerks;
- Fig. 4: ein Beispiel der Organisation der Abrufdaten in der Datenbank zur Konfiguration eines Funkknotens mittels der mobilen Datensende-/ Empfangsstation;
- Fig. 5: ein Beispiel der in dem Digital Twin enthaltenen Funkknoten-Attributsdaten;
- Fig. 6: eine stark vereinfachte schematische Darstellung der Kommunikationsstrecken bei einem Konfigurationszugriff an einem Funkknoten durch die mobile Datensende-/Empfangsstation in einer Struktur, bei der die zentrale Einheit in das Head End integriert ist;
- Fig. 7: ein erstes Beispiel von Einzelschritten bei einer Konfiguration eines Funkknotens eines Fixed Netzwerks gemäß Fig. 1 über die mobile Datensende-/Empfangsstation; sowie
- Fig. 8: ein zweites Beispiel eines Ablaufdiagramms bei einer Konfiguration eines Funkknotens eines Fixed Netzwerks gemäß Fig. 1 über die mobile Datensende-/Empfangsstation.

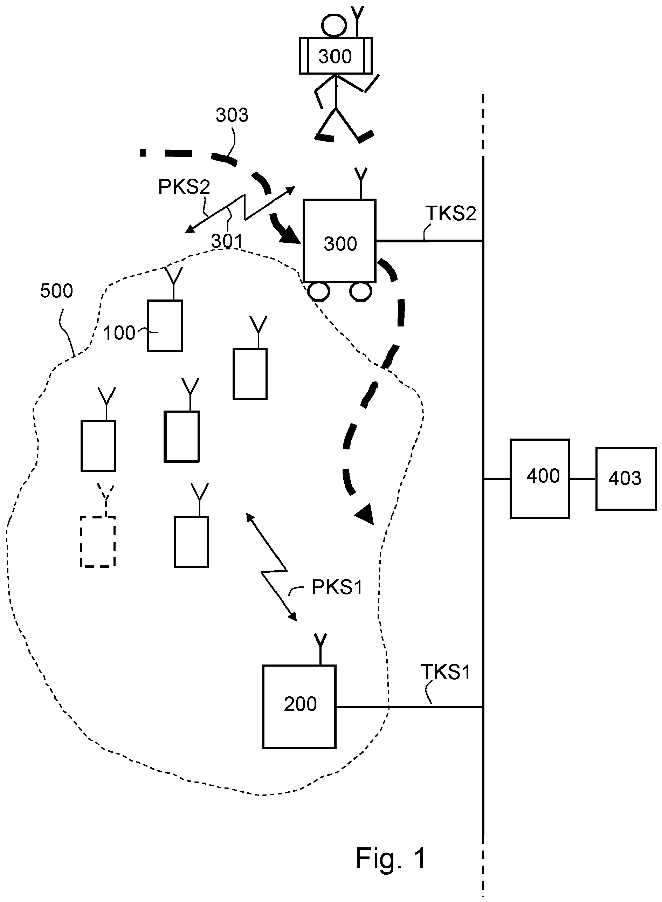

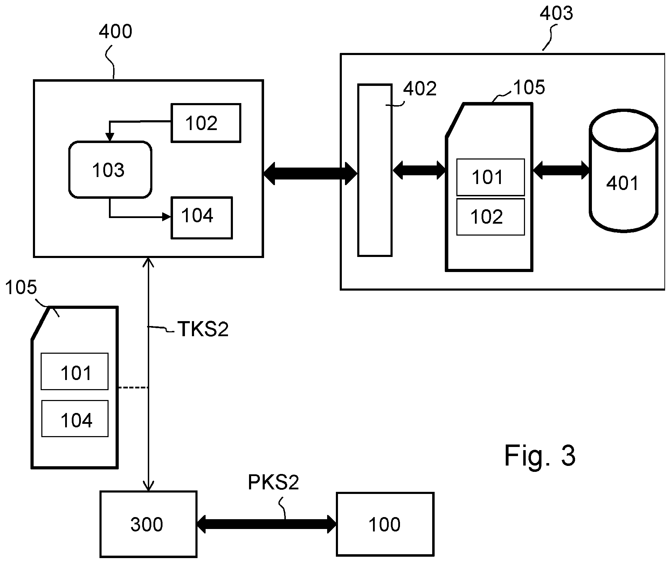

Fig. 1 zeigt eine Mehrzahl von einzelnen Funkknoten 100, die in einem sogenannten Fixed Netzwerk 500 zusammengefasst sind. Die Funkknoten 100 des Fixed Netzwerks 500 sind in der Lage mit mindestens einer ortsgebundenen Basisstation 200 entlang einer ersten Primärkommunikationsmessstrecke PKS1 bidirektional zu kommunizieren. Die Basisstation 200 steht wiederum über eine erste tertiäre Kommunikationsstrecke mit einem Head End 400 in Verbindung. Das Head End 400 ist dazu vorgesehen, die Daten (z.B. Betriebsdaten, Verbrauchsdaten, Nutzerdaten, usw.) bezüglich der einzelnen Funkknoten 100 zu verwalten. Das Head End 400 kann mit einer zentralen Einheit 403 verbunden sein. Die zentralen Einheit 403 verfügt gemäß Fig. 3 über eine Datenbank 401 als zentralen Speicher. Bei der Datenbank 401 kann es sich auch um einen sog. Cloudspeicher handeln. Das Head End 400 sowie die zentrale Einheit 403 dienen dazu, die einzelnen Funkknoten 100 des Fixed Netzwerks 500 zu verwalten sowie von den einzelnen Funkknoten 100 übertragene Daten weiterzuverarbeiten.

Bei dem Funkknoten 100 kann es sich vorzugsweise um einen Funksensorknoten zur Erfassung eines Verbrauchs (wie z.B. Wasserverbrauchs, Gasverbrauchs, Elektrizitätsverbrauchs) und/oder um einen Funkaktorknoten zur Verrichtung einer Arbeit handeln. Selbstverständlich kann der Funkknoten 100 auch beide Funktionalitäten in einem beinhalten.

Im Normalbetriebsfall wird das Fixed Netzwerk 500 über die erste Primärkommunikationsstrecke PKS1 von der jeweiligen Basisstation 200 ausgelesen bzw. Konfigurationsaufträge an den einzelnen Funkknoten 100 über die jeweilige Basisstation 200 des Fixed Netzwerks 500 abgewickelt.

Bei dem Verfahren gemäß der Erfindung ist ein zusätzliches Auslesen und Konfigurieren des Fixed Netzwerks 500 mittels einer mobilen Datensende-/Empfangsstation 300 vorgesehen. Hierbei kann es sich beispielsweise um ein Fahrzeug handeln, welches entlang einer bestimmten Route 303 sich entlang bewegt und eine bidirektionale Datenübertragung zwischen der mobilen Datensende-/Empfangsstation 300 und dem jeweiligen Funkknoten 100 über eine zweite Primärkommunikationsstrecke PKS2 erfolgt.

Bei den ersten und zweiten Kommunikationsstrecken PKS 1 und PKS2 sind vorzugsweise lizenzfreie Frequenzbereiche F vorgesehen. Bei der ersten Primärkommunikationsstrecke PKS1 handelt es sich vorzugsweise um LoRaWAN. Bei der zweiten Primärkommunikationsstrecke PKS2 handelt es sich vorzugsweise um Wireless M-Bus. Vorzugsweise kommt für die erste Primärkommunikationsstrecke PKS1 und/oder die zweite Primärkommunikationsstrecke PKS2 Frequenzen aus der Frequenzverteilung und Bandnutzung des 868-MHz-Bands in Frage.

Anstelle eines Fahrzeugs kann die mobile Datensende-/Empfangsstation 300 auch in Form einer Datenverarbeitungseinheit, wie z.B. einem Notebook, einem Handheld oder einem Smartphone realisiert werden, welches von einem Passanten zur Auslesung des Fixed Netzwerks 500 mitgeführt wird.

Die Basisstation 200 des Fixed Netzwerks 500 steht über eine erste Tertiärkommunikationsstrecke TKS1 mit dem Head End 400 in Verbindung. Beispielsweise kann die Basisstation 200 hierbei als Gateway ausgebildet sein, welches über einen (in den Figuren nicht dargestellten) Server über das Internet mit dem Head End 400 verbunden ist.

Ebenso besteht die Möglichkeit, die mobile Datensende-/Empfangsstation 300 über eine zweite Tertiärkommunikationsstrecke TKS2 mit dem Head End 400 zu verbinden. Bei der zweiten Tertiärkommunikationsstrecke TKS2 kann es sich beispielsweise um WLAN, Bluetooth0 oder eine Mobilfunkstrecke handeln.

Betrieben wird das Fixed Netzwerk 500 beispielsweise von einem städtischen Versorgungsunternehmen. Die betreffenden Funkknoten 100 befinden sich stationär in der privaten oder gewerblichen Infrastruktur.

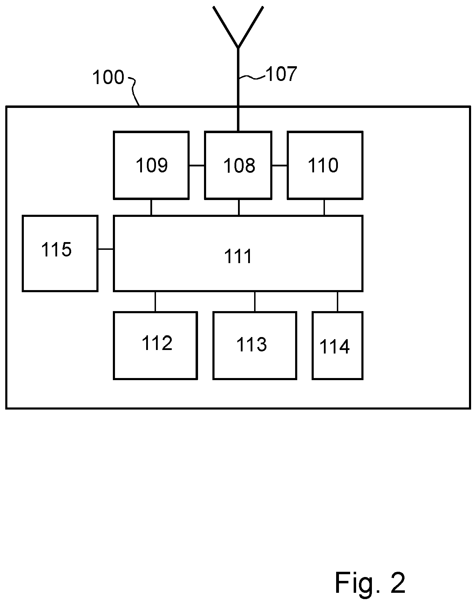

Fig. 2 zeigt beispielhaft und stark vereinfacht dargestellt den funktionellen Aufbau eines Funkknotens 100 des Fixed Netzwerks 500 von Fig. 1. Der Funkknoten 100 verfügt beispielsweise über eine einzige Antenne 107 sowie zwei Transceivern 109, 110, wobei der Transceiver 109 für die erste Primärkommunikationsstrecke PKS1 und der Transceiver 110 für die Primärkommunikationsstrecke PKS2 vorgesehen ist. Eine Antennensynchronisations-Schaltung 108 sorgt dafür, dass beide Transceiver 109, 110 lediglich einen synchronisierten Zugriff auf die Antenne 107 vornehmen können. Darüber hinaus umfasst der Funkknoten 100 einen Mikroprozessor 111 mit einer Steuerungs- und/oder Kontrollschaltung sowie einen Speicher 113. Ferner verfügt der Funkknoten 100 über eine Batterie 112, vorzugsweise in Form einer sogenannten Long Life Batterie vorzugsweise mit einer Lebensdauer von mindestens 10 Jahren. Der Funkknoten 100 kann zudem über ein Bedienpanel/Display 114 verfügen.

Gemäß dem in Fig. 3 gezeigten Beispiel steht das Head End 400 mit der zentralen Einheit 403 in einer bidirektionalen Kommunikationsverbindung. Alternativ kann die zentralen Einheit 403 auch in das Head End 400 integriert sein. Die zentrale Einheit 403 umfasst eine Datenbank 401, in die Daten bezüglich des Fixed Netzwerks 500, einschließlich der dort betriebenen Funkknoten 100, zentral hinterlegt sind.

Für einen Zugriff der mobilen Datensende-/Empfangsstation 300 als autorisierte Instanz auf einen bestimmten Funkknoten 100 über die zweite Primärkommunikationsstrecke PKS2 werden aus der Datenbank 401 Zugriffsdaten 105 extrahiert, die einen Token 101 sowie einen Digital Twin 102 enthalten. Bei dem Token 101 handelt es sich um einen für einen ganz bestimmten Funkknoten 100 vergebenen, individuellen Token in Form eines digitalen Pfandes. Bei dem Digital Twin 102 handelt es sich um eine Kopie bzw. ein Abbild der von außen beeinflussbaren Attributsdaten (Konfigurationsdaten) des betreffenden Funkknotens 100.

Die Anforderung der betreffenden Daten 101 sowie 102 für den auserwählten Funkknoten 100 von der zentralen Einheit 403 erfolgt vom Head End 400 aus über das Vergabesystem 402. Die vom Vergabesystem 402 angeforderten Zugriffsdaten 105 in Form des Tokens 101 sowie des Digital Twin 102 werden an das Head End 400 übertragen. Das Head End 400 bereitet die Zugriffsdaten 105 entsprechend der Anforderung auf. Durch die Vergabe der Zugriffdaten 105 werden alle weiteren Zugriffe auf die zentrale Einheit 403 für diesen Funkknoten vom Head End 400 gesperrt.

Bei dem in Fig. 3 gezeigten Ausführungsbeispiel werden anhand des Digital Twin 102 über eine Kommandoerzeugungseinrichtung 103 spezifische vorgefertigte Kommandos 104 erzeugt. Hierbei handelt es sich um vorgefertigte Kommandos, mit denen nach Herstellung eines Zugriffs durch die mobile Datensende-/Empfangsstation 300 im betreffenden Funkknoten 100 eine erwünschte Konfiguration gestartet und vollzogen werden kann. Die mobile Datensende-/Empfangsstation 300 führt hierbei lediglich die vorgefertigten Kommandos für die Herstellung des Zugriffs sowie zur Übertragung der Zugriffsdaten 105 aus. Die Zugriffsdaten 105 in Form des Tokens 101 sowie der vorgefertigten Kommandos 104 werden über die zweite Tertiärkommunikationsstrecke TKS2 vom Head End 400 an die mobile Datensende-/Empfangsstation 300 übertragen. Der Digital Twin 102 verbleibt im Head End 400. Da das Head End 400 den Digital Twin 102 hat, braucht das Head End 400 zur Erzeugung eines Kommandos die Betriebsdaten nicht auslesen. Vom Head End 400 können somit vorgefertigte Kommandos erzeugt werden, ohne dass die Betriebsdaten des Funkknotens ausgelesen werden müssen.

Sobald die mobile Datensende-/Empfangsstation 300 in Reichweite zu dem auserwählten Funkknoten 100 gelangt, wird eine Kommunikation gestartet und es erfolgt der Zugriff auf den Funkknoten 100, bei dem anhand der im Head End 400 vorbereiteten Kommandos 104 die Konfiguration des Funkknotens 100 entsprechend den notwendigen Anforderungen angepasst werden kann.

Eine erfolgreiche Konfiguration wird vom Funkknoten 100 z.B. über die zweite Primärkommunikationsstrecke PKS2 der mobilen Datensende-/Empfangsstation 300 bestätigt, woraufhin die mobile Datensende-/Empfangsstation 300 sich beim Head End 400 zurückmeldet und die erfolgreiche Konfiguration bestätigt. In Zusammenhang damit werden auch die Abrufdaten 105 an das Head End 400 rückübertragen. Gleichzeitig wird der beim Head End 400 verbliebene Digital Twin 102 entsprechend aktualisiert und über das Vergabesystem 402 wieder in die Datenbank 401 eingeschrieben. Auf diese Weise wird in der Datenbank 401 für jeden Funcknoten 100 des Fixed Netzwerks 500 ein aktualisierter Digital Twin 102 vorgehalten.

Ebenso kann in der Datenbank 401 ein für jeden Funkknoten 100 des Fixed Netzwerks 500 individueller Token 101 vorgehalten werden. Alternativ kann für jeden Konfigurationsvorgang ein individueller Token 101 für den betreffenden Funkknoten 100 erstellt werden. Vorzugsweise kann der Token 101 auch mit einer zeitlich begrenzten Gültigkeit versehen sein. Dies könnte dann von Bedeutung sein, wenn der Token 101 "verloren geht", d.h. von der mobilen Datensende-/Empfangsstation 300 nicht an das Head End 400 zurückgesendet werden kann.

Nach dem Empfang der Zugriffsdaten durch das Head End 400 wird der Zugriff auf den Funkknoten 100 wieder freigegeben. Bei einem mangelnden Empfang der Zugriffsdaten durch das Head End 400 kann eine Freigabe des Zugriffs z.B. auch erzwungenen werden oder durch Zeitablauf des Tokens 101 erfolgen.

Alternativ können die vom Head End 400 übertragenen Zugriffdaten 105 anstatt der vorgefertigten Kommandos den Digital Twin 102 umfassen. In diesem Fall kann der User an der mobilen Datensende-/Empfangsstation 300 entsprechende Kommandos konfigurieren, um den Zugriff sowie die Änderung der Betriebsdaten bzw. Konfiguration zu veranlassen. Da in diesem Fall die mobile Datensende-/Empfangsstation 300 den Digital Twin 102 erhält, braucht Letztere zur Erzeugung eines Kommandos die Betriebsdaten des Funkknotens nicht auslesen. Von der mobilen Datensende-/Empfangsstation 300 können somit Kommandos erzeugt werden, ohne dass die Betriebsdaten des Funkknotens ausgelesen werden müssen. Nach erfolgreicher Änderung der Betriebsdaten bzw. Konfiguration wird der Digital Twin 102 in der mobilen Datensende-/ Empfangsstation 300 aktualisiert und an das Head End 400 zurückübertragen.

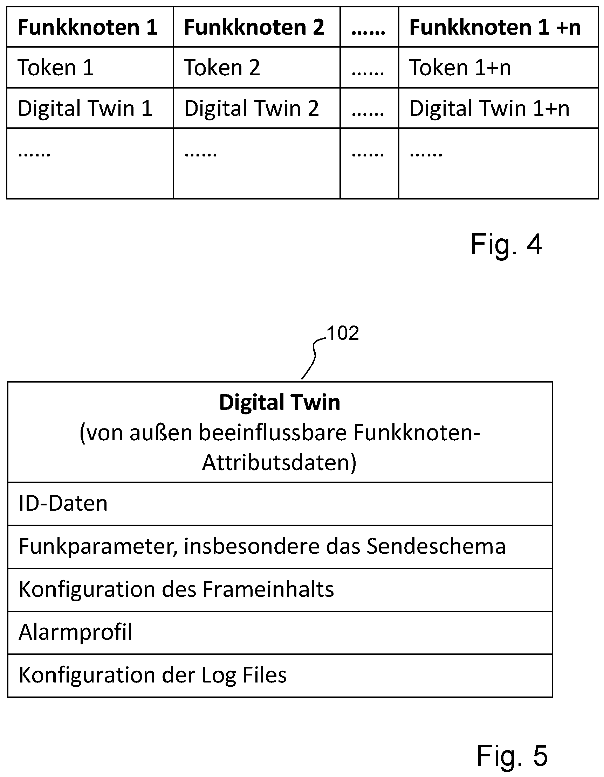

Gemäß Fig. 4 wird in der Datenbank 401 für jeden Funkknoten 1, 2 bis 1.n ein zugehöriger Token 1, 2 bis 1+n sowie ein zugehöriger Digital Twin 1, 2 bis 1+n geführt.

Bei dem Digital Twin 102 handelt es sich um ein Abbild der von außen beeinflussbaren Funkknoten-Attributsdaten (Betriebs-oder Konfigurationsdaten). Diese können die ID-Daten, die Funkparameter (insbesondere das Sendeschema), die Konfiguration des Frame-Inhalts, das Alarmprofil und/oder die Konfiguration der Log-Files bzw. des Logging umfassen.

Der Token 101 kann einen Zugriffschlüssel des jeweiligen Funkknotens 100 umfassen oder durch Letzteren realisiert sein.

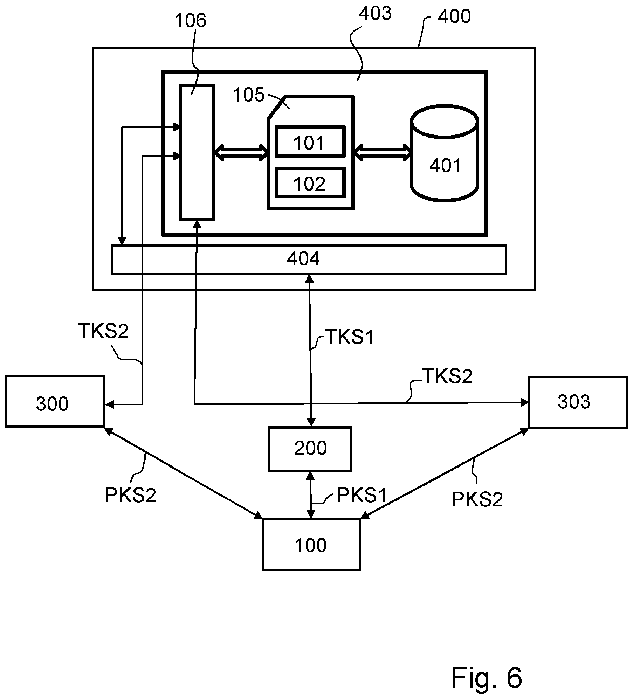

Fig. 6 zeigt eine stark vereinfachte schematische Darstellung der Kommunikationsstrecken bei einem Konfigurationszugriff an einem Funkknoten durch die mobile Datensende-/Empfangsstation in einer Struktur, bei der die zentrale Einheit 403 in das Head End 400 integriert ist. Die Zugriffdaten 105 können hierbei von dem Vergabesystem 106 der zentralen Einheit 403 an die mobile Datensende-/ Empfangsstation 300 oder an eine andere mobile Datensende-/Empfangsstation 303 übergeben bzw. über die jeweiligen zweiten tertiären Kommunikationsstrecken TKS2 übermittelt werden. Es kann jedoch nur diejenige mobile Daten-sende/Empfangsstation, z.B. die mobile Datensende-/Empfangsstation 300, als autorisierte Instanz agieren, die die Zugriffdaten 105 tatsächlich erhalten hat. Zur Kommunikation des Head End 400 mit der Basisstation 200 des Fixed Netzwerks 500 sowie mit der jeweiligen mobile Datensende-/Empfangsstation 300, 303 verfügt das Head End 400 über ein Kommunikationssystem 404.

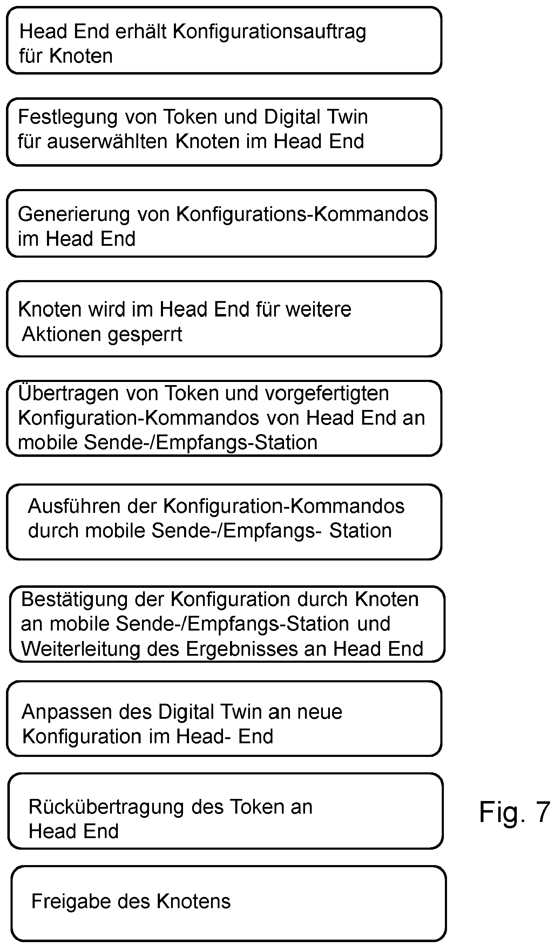

In der Fig. 7 sind die Einzelschritte bei einem Konfigurationszugriff gemäß der vorliegenden Erfindung aufgelistet. Bei der Variante nach Fig. 7 werden zusammen mit dem Token 101 lediglich im Head End erzeugte vorgefertigte Kommandos an die mobile Datensende-/Empfangsstation übertragen, der Digital Twin 102 verbleibt im Head End 400. Die mobile Datensende-/Empfangsstation dient hierbei zum Übertragen der vorgefertigten Kommandos. Die Reihenfolge der in Fig. 7 gezeigten Einzelschritte kann variieren. Einzelschritte aus der Fig. 7 können auch zusammengefasst werden.

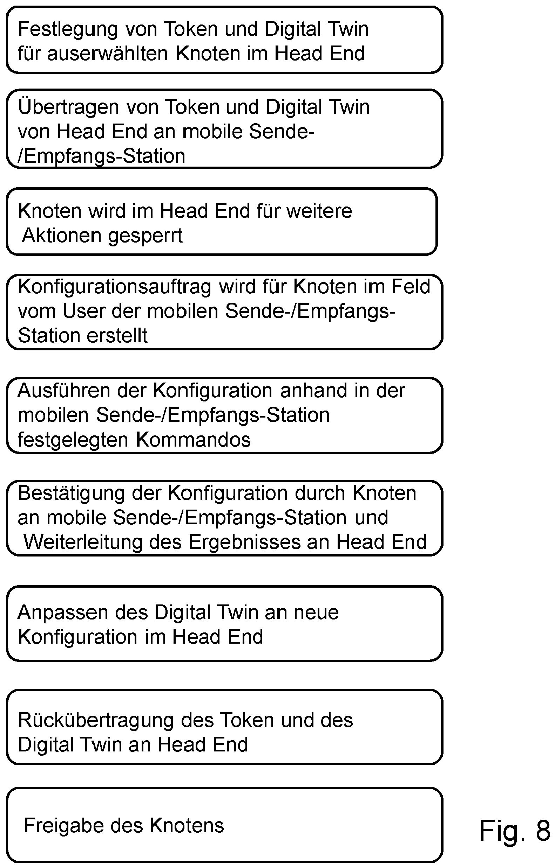

In Fig. 8 wird hingegen der Digital Twin 102 zusammen mit dem Token 101 an die mobile Datensende-/Empfangsstation übermittelt. Hierdurch kann ein User an der mobile Datensende-/Empfangsstation mithilfe des Digital Twin 102 den Zugriff im Feld z. B. ad hoc selbst festlegen und durchführen. Die Reihenfolge der in Fig. 8 gezeigten Einzelschritte kann ebenfalls variieren. Einzelschritte aus der Fig. 8 können auch zusammengefasst werden. In beiden Fällen erfolgt eine Anpassung der geänderten Betriebsdaten des betreffenden Funkknotens an den Digital Twin, d.h. eine Aktualisierung des Digital Twin.

Sollte eine Rückübertragung des Token 101 oder des Token 101 und des Digital Twin 102 nicht durchführbar sein, können die Zugriffsdaten in Form des Tokens oder des Digital Twin und des Tokens auf dem betreffenden Knoten auch zwangsweise wieder freigeben werden. Hierzu erhält der User einen Warnhinweis und muss die zwangsweise Freigabe bzw. den Abbruch der Übertragung bestätigen. In diesem Fall muss der Digital Twin neu erstellt bzw. neu synchronisiert und vom Funkknoten ausgelesen werden.

Gemäß einer Ausgestaltung der vorliegenden Erfindung kann der Token 101 und/oder der Digital Twin 102 der Betriebsdaten des betreffenden Funkknotens 100 auch bei einem Zugriff, z. B. einer Konfiguration des betreffenden Funkknotens 100, über das Fixed Netzwerk 500 bzw. über dessen Basisstation 200 gemäß Fig. 1 verwendet werden. Solange der Token 101 und/oder der Digital Twin 102 des betreffenden Funkknotens 100 vom Fixed Netzwerk 500 verwendet wird, ist ein Konfigurationsauftrag für das mobile System d. h. die mobile Datensende-/Empfangsstation 300 auf den betreffenden Funkknoten 100 nicht möglich.

### BEZUGSZEICHENLISTE

- 100: Funkknoten
- 101: Token
- 102: Digital Twin
- 103: Kommandoerzeugung
- 104: Kommandos
- 105: Zugriffsdaten
- 106: Vergabesystem
- 107: Antenne
- 108: Antennensynchronisation-Schaltung
- 109: erster Transceiver
- 110: zweiter Transceiver
- 111: Mikroprozessor
- 112: Batterie
- 113: Speicher
- 114: Bedienpanel/Display
- 115: Sensor- und/oder Aktoreinrichtung
- 200: Basisstation
- 201: WAN
- 300: mobile Datensende-/Empfangsstation
- 301: WAN
- 302: Wegstrecke
- 400: Head End
- 401: Datenbank
- 402: Vergabesystem
- 403: zentrale Einheit
- 404: Kommunikationssystem
- 500: Fixed Network

- PKS1: erste Primärkommunikationsstrecke
- PKS2: zweite Primärkommunikationsstrecke
- TKS1: erste Tertiärkommunikationsstrecke
- TKS2: zweite Tertiärkommunikationsstrecke

## Patentansprüche

1. Verfahren zum Betrieb eines Funkknotens (100), vorzugsweise eines Funksensorknotens zur Erfassung eines Verbrauchs und/oder eines Funkaktorknotens zur Verrichtung einer Arbeit, in einem eine Mehrzahl von Funcknoten (100) umfassenden Fixed Netzwerk (500),
wobei zwischen einem Funkknoten (100) und einer Basisstation (200) des Fixed Netzwerks (500) eine erste, vorzugsweise bidirektionale PrimärKommunikationsstrecke (PKS1) vorgesehen ist, über die ein Zugriff, insbesondere ein Konfigurationszugriff, von der Basisstation (200) oder über die Basisstation (200) auf den Funkknoten (100) durchführbar ist,
wobei zwischen dem Funkknoten (100) und einer mobilen Datensende-/Empfangsstation (300) eine zweite vorzugsweise bidirektionale Primär-Kommunikationsstrecke (PKS2) vorgesehen ist, über die ein Zugriff, insbesondere ein Konfigurationszugriff, von der mobilen Datensende-/Empfangsstation (300) oder über die mobile Datensende-/Empfangsstation (300) auf den Funkknoten (100) durchführbar ist,
wobei ein Head End (400) vorgesehen ist, in dem die Funkknoten (100) verwaltet werden, und
wobei das Head End (400) in der Lage ist, mit der Basisstation (200) des Fixed Netzwerks (500) und/oder mit der mobilen Datensende-/ Empfangsstation (300) über eine tertiäre Kommunikationsstrecke (TKS1, TKS2) zu kommunizierten, **dadurch gekennzeichnet, dass**
ein Zugriff, insbesondere ein Konfigurationszugriff, von der mobilen Datensende-/Empfangsstation (300) oder vom Head End (400) über die mobile Datensende-/Empfangsstation (300) auf einen Funkknoten (100) der Mehrzahl der Funkknoten (100) des Fixed Netzwerks (500) mittels Zugriffdaten auf Basis einer Kombination eines Tokens (101) sowie eines Digital Twin (102) der Betriebsdaten des betreffenden Funkknotens (100) erfolgt.

2. Verfahren nach Anspruch 1, **dadurch gekennzeichnet, dass** für die jeweiligen Knoten (100) des Fixed Netzwerks (500) je ein Token (101) und/oder je ein Digitaler Twin (102) im Head End (400) vorgesehen ist bzw. sind.

3. Verfahren nach Anspruch 1 oder 2, **dadurch gekennzeichnet, dass** für einen Zugriff durch die mobile Datensende-/Empfangsstation (300) der Token (101) vom Head End (400) an eine mobile Datensende-/Empfangsstation (300) übertragen wird.

4. Verfahren nach einem der vorhergehenden Ansprüche, **dadurch gekennzeichnet, dass** der Token (101) einen Zugriffschlüssel des jeweiligen Funkknotens (100) umfasst oder durch Letzteren realisiert wird.

5. Verfahren nach einem der vorhergehenden Ansprüche, **dadurch gekennzeichnet, dass** der Digital Twin (102) als Betriebsdaten des jeweiligen Funkknotens (100)
die ID-Daten, und/oder
die Funkparameter, insbesondere das Sendeschema, und/oder
die Konfiguration des Frameinhalts, und/oder
das Alarmprofil, und/oder
die Konfiguration der Log Files
umfasst.

6. Verfahren nach einem der vorhergehenden Ansprüche, **dadurch gekennzeichnet, dass** die mobile Datensende-/Empfangsstation (300) im Zuge des Zugriffs auf die Betriebsdaten des jeweiligen Funkknotens (100), insbesondere auf dessen Konfigurationsdaten (KD), den Digitalen Twin (102) entsprechend den am Funkknoten (100) vorgenommenen Änderungen, vorzugsweise Konfigurationsänderungen, synchronisiert.

7. Verfahren nach einem der vorhergehenden Ansprüche, **dadurch gekennzeichnet, dass** die im Rahmen des Zugriffs auf den jeweiligen Knoten (100) lediglich die an diesem vorgenommenen Änderungen der Betriebsdaten oder der Konfiguration in den Digital Twin (102) eingeschrieben werden.

8. Verfahren nach den Ansprüchen 3 bis 7, **dadurch gekennzeichnet, dass** nach dem Zugriff
der Token (101) oder der Digital Twin (102) sowie der Token (101) von der zugreifenden mobilen Datensende-/Empfangsstation (300) an das Head End (400) rückübertragen werden.

9. Verfahren nach einem der vorhergehenden Ansprüche, **dadurch gekennzeichnet, dass** der Token (101) eine zeitlich begrenzte Gültigkeit hat.

10. Verfahren nach einem der vorhergehenden Ansprüche, **dadurch gekennzeichnet, dass** der Zugriff vom Head End (400) der mobilen Datensende-/Empfangsstation (300), insbesondere im Zuge eines Arbeitsauftrags, zugewiesen oder von der mobilen Datensende-/Empfangsstation (300) beim Head End (400) angefordert wird.

11. Verfahren nach einem der vorhergehenden Ansprüche, **dadurch gekennzeichnet, dass** durch die Erstellung der Zugriffsdaten der betreffende Funkknoten (100) gegen weitere Zugriffe in der zentralen Einheit (400) gesperrt ist.

12. Verfahren nach einem der vorhergehenden Ansprüche, **dadurch gekennzeichnet, dass** nach Empfang der Zugriffsdaten durch das Head End (400) der Zugriff auf den Funkknoten (100) wieder freigegeben wird oder bei mangelndem Empfang der Zugriffsdaten durch das Head End (400) eine Freigabe des Zugriffs erzwungenen wird.

13. Verfahren nach einem der vorhergehenden Ansprüche, **dadurch gekennzeichnet, dass** zur Steuerung des Zugriffs die Zugriffsdaten vorgefertigte Kommandos (104) umfassen und/oder Markierungen in dem Digitalen Twin (102) vorgesehen sind, wobei insbesondere vorgesehen ist, dass im Fall von vorgefertigten Kommandos (104) der Digital Twin (101) im Head End (400) verbleibt.

14. Verfahren nach einem der vorhergehenden Ansprüche, **dadurch gekennzeichnet, dass** die Zugriffdaten zwangsweise freigegeben werden.

15. Verfahren nach einem der vorhergehenden Ansprüche, **dadurch gekennzeichnet, dass**
der Token (101) und/oder der Digital Twin (102) der Betriebsdaten des betreffenden Funkknotens (100) auch bei einer Konfiguration des betreffenden Funkknotens (100) über das Fixed Netzwerk (500) verwendbar ist, und
solange der Token (101) und/oder der Digital Twin (102) des betreffenden Funkknotens (100) im Fixed Netzwerk (500) verwendet wird, ein Konfigurationsauftrag für die mobile Datensende-/Empfangsstation (300) nicht möglich ist.

16. Verfahren nach einem der vorhergehenden Ansprüche, **dadurch gekennzeichnet, dass**
als Fixed Netzwerk (500) LoRaWAN implementiert ist und/oder
zwischen dem Funkknoten (100) und der mobilen Datensende-/Empfangsstation (300) eine drahtlose M-Bus-Kommunikation implementiert ist, und/oder
im Fixed Netzwerk (500) im Regelbetrieb ein, vorzugsweise automatisierter, zeitfensterbasierter Datenaustausch stattfindet.

17. Funkknoten (100), insbesondere Funksensorknoten zur Erfassung eines Verbrauchs und/oder Funkaktorknoten zur Verrichtung einer Arbeit mit
einem Gehäuse (102),
einem ersten Transceiver (109) für eine bidirektionale Kommunikation entlang einer ersten, vorzugsweise bidirektionalen Primär-Kommunikationsstrecke (PKS1),
einem zweiten Transceiver (110) für eine bidirektionale Kommunikation entlang einer zweiten, vorzugsweise bidirektionalen Primär-Kommunikationsstrecke (PKS2),
einer Sensor- und/oder Aktoreinrichtung (115),
einer Batterie (112), vorzugsweise einer Longlife-Batterie,
einem Mikroprozessor (111) mit einer elektronischen Steuer- und Regeleinrichtung, **dadurch gekennzeichnet, dass**
die elektronische Steuer- und Regeleinrichtung zum Betrieb des Verfahrens nach einem der vorhergehenden Ansprüche hergerichtet ist.
